(19) **Europäisches Patentamt / European Patent Office / Office européen des brevets**

(11) **EP 4 620 932 A1**

(12) **EUROPEAN PATENT APPLICATION**
published in accordance with Art. 153(4) EPC

(43) Date of publication:
**24.09.2025 Bulletin 2025/39**

(21) Application number: **23891444.4**

(22) Date of filing: **08.11.2023**

(51) International Patent Classification (IPC):
**C03C 13/02** (2006.01)

(52) Cooperative Patent Classification (CPC):
**C03C 13/00**

(86) International application number:
**PCT/JP2023/040292**

(87) International publication number:
**WO 2024/106292 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022 JP 2022183742**

(71) Applicant: **NIPPON SHEET GLASS COMPANY, LIMITED**
**Tokyo 108-6321 (JP)**

(72) Inventor: **NAKAMURA, Aya**
**Tokyo 108-6321 (JP)**

(74) Representative: **Cabinet Beau de Loménie**
**103, rue de Grenelle / CS 90800**
**75340 Paris Cedex 07 (FR)**

(54) **GLASS FIBER AND COMPOSITION FOR GLASS FIBER**

(57) The present disclosure provides a glass composition for a glass fiber, the glass composition including, in mass%:
$SiO_2$
50 to 65%;
$Al_2O_3$
10 to 30%;
MgO
10 to 20%;
CaO
0 to 7%;
$TiO_2$
0 to 5%; and
$ZrO_2$
0 to 5%, where

a sum of a $SiO_2$ content, a $TiO_2$ content and a $ZrO_2$ content is 58% or more,
a sum of the $TiO_2$ content and the $ZrO_2$ content is 0.1 % or more, and
when a MgO content is 10% or more and less than 16%, the glass composition contains 0.1% or more of $ZrO_2$.

EP 4 620 932 A1

**Description**

TECHNICAL FIELD

The present invention relates to a glass fiber and a glass composition suitable for a glass fiber.

BACKGROUND ART

Although many of glass fibers in practical use are formed of a glass composition having a Young's modulus of 90 GPa or less, glass compositions having a Young's modulus of more than 90 GPa are also known. For example, Patent Literature 1 discloses a glass composition including a large amount of rare-earth oxides. The total content of $Y_2O_3$ and $La_2O_3$ in the glass composition of Patent Literature 1 is in the range of 20 to 60 weight%. However, a high rare-earth oxide content increases the manufacturing cost. Taking this into account, Patent Literature 2 discloses a technique by which the Young's modulus of a glass composition is improved without a large amount of rare-earth oxides. The glass composition of Patent Literature 2 includes 15 to 30% MgO in mol% as a component for improving the Young's modulus.

CITATION LIST

Patent Literature

Patent Literature 1: WO 2006/057405 A1
Patent Literature 2: JP 6391875 B1

SUMMARY OF INVENTION

Technical Problem

Patent Literature 2 fails to specifically discuss an acid resistance of a glass composition. It is therefore an object of the present invention to provide a glass fiber having a high Young's modulus and a high acid resistance and a glass composition suitable for manufacturing such a glass fiber.

Solution to Problem

Through studies on a blending ratio of glass components, the present inventor has completed a glass composition suitable for a glass fiber having an excellent balance between the acid resistance and the Young's modulus.
The present invention provides a glass composition for a glass fiber, the glass composition including, in mass%:

| | |
|---|---|
| $SiO_2$ | 50 to 65%; |
| $Al_2O_3$ | 10 to 30%; |
| MgO | 10 to 20%; |
| CaO | 0 to 7%; |
| $TiO_2$ | 0 to 5%; and |
| $ZrO_2$ | 0 to 5%; where |

a sum of a $SiO_2$ content, a $TiO_2$ content and a $ZrO_2$ content is 58% or more,
a sum of the $TiO_2$ content and the $ZrO_2$ content is 0.1 % or more, and
when a MgO content is 10% or more and less than 16%, the glass composition includes 0.1% or more of $ZrO_2$.

The present invention provides also a glass fiber including the glass composition for glass fibers according to the present invention.

Advantageous Effects of Invention

The present invention provides a glass fiber having an excellent balance between the acid resistance and the Young's modulus, and a glass composition for a glass fiber, the glass composition being suitable for such a glass fiber.

DESCRIPTION OF EMBODIMENTS

Embodiments of the present invention will be described hereinafter. The following description is not intended to limit the present invention to particular embodiments. Herein, the content of each component in a glass composition below is in mass%, and mass% is basically represented by "%". Herein, being "substantially free of" a component means that the content of the component is less than 0.1 mass%, less than 0.05 mass%, less than 0.01 mass%, less than 0.005 mass%, even less than 0.003 mass%, or, in some cases, less than 0.001 mass%. The adverb "substantially" is intended to mean that a small amount of impurities such as those derived from a glass raw material, a manufacturing apparatus, and the like may be contained. The term "alkali metal oxides" means $Li_2O$, $Na_2O$, and $K_2O$, and is sometimes referred to as $R_2O$. The upper and lower limits of each of the following contents can be suitably combined in both cases where the upper and lower limits are individually specified and where the upper and lower limits are expressed as a range.

[Glass composition]

<Components>

Components that can form the glass composition of the present embodiment will be each described hereinafter.

($SiO_2$)

$SiO_2$ is a component that forms a glass network, and is also a component that adjusts the devitrification temperature and the viscosity during glass forming and that improves the acid resistance. A $SiO_2$ content is, for example, 50 to 65%. The lower limit of the $SiO_2$ content may be 55% or more, 57% or more, 57.5% or more, 58% or more, 59% or more, 59.6% or more, 59.8% or more, or even 60% or more. The upper limit of the $SiO_2$ content may be 63% or less, 62.3% or less, 62% or less, 61.8%, 61.5% or less, or even 61% or less. The $SiO_2$ content may be 55 to 62%, or even 57.5 to 61.5%.

($Al_2O_3$)

$Al_2O_3$ is a component that adjusts the devitrification temperature and the viscosity during glass forming and that contributes to improvement of the water resistance of the resulting glass. An $Al_2O_3$ content is, for example, 10 to 30%. The lower limit of the $Al_2O_3$ content may be, for example, 15% or more, 17% or more, 19% or more, 19.5% or more, 19.7% or more, or even 20% or more. The upper limit of the $Al_2O_3$ content may be 28% or less, 25% or less, 22% or less, 21% or less, 20.8% or less, or even 20.6% or less. The $Al_2O_3$ content may be 15 to 30%, or even 19.7 to 20.6%. As described below, in the case where the MgO content is less than 16%, the $Al_2O_3$ content may be 22 to 29%, or even 23.5 to 28%.

($B_2O_3$)

$B_2O_3$ is an optional component that forms a glass network and that adjusts the devitrification temperature and the viscosity during glass forming. A $B_2O_3$ content is, for example, 0 to 1.5%. The lower limit of the $B_2O_3$ content may be 0.02% or more. The upper limit of the $B_2O_3$ content may be 1.2% or less, 1% or less, 0.5% or less, 0.3% or less, 0.1% or less, or even 0.08% or less. The glass composition of the present embodiment may be substantially free of $B_2O_3$.

(MgO)

MgO is a component that improves the Young's modulus and that affects the devitrification temperature, the viscosity, and the like. A MgO content is, for example, 10 to 20%. The lower limit of the MgO content may be 12% or more, 14% or more, 16% or more, 16.5% or more, 16.6% or more, 16.8% or more, or even 17% or more. The upper limit of the MgO content may be 19% or less, 18% or less, 17.8% or less, 17.7% or less, or even 17.6% or less. The MgO content may be 12 to 20%, or even 14 to 19%. In the case where the MgO content is less than 16%, addition of $ZrO_2$ is recommended.

(CaO)

CaO is an optional component that adjusts the devitrification temperature and the viscosity during glass forming. A CaO content is, for example, 0 to 7%. The lower limit of the CaO content may be 0.1% or more, 0.3% or more, 0.5% or more, or even 0.7% or more. The upper limit of the CaO content may be 5% or less, 3% or less, 2% or less, 1.5% or less, 1.4% or less, 1.3% or less, 1.2% or less, or even 1% or less.

(Alkali metal oxides)

Alkali metal oxides ($R_2O$) are optional components that adjust the devitrification temperature and the viscosity during glass forming. A total alkali metal oxide content, specifically, [$Li_2O$] + [$Na_2O$] + [$K_2O$], is, for example, 0 to 3%. The lower limit of the total alkali metal oxide content may be 0.05% or more, 0.1% or more, 0.2% or more, or even 0.3% or more. The upper limit of the $R_2O$ content may be 2% or less, 1.5% or less, 1.2% or less, 1.0% or less, 0.9% or less, or even 0.8% or less. A high $R_2O$ content can sometimes prevent a sufficient increase in Young's modulus.

A $Li_2O$ content is, for example, 0 to 1.5%. The lower limit of the $Li_2O$ content is 0.1% or more, or 0.2% or more, and may be 0.3% or more, or even 0.4% or more. The upper limit of the $Li_2O$ content may be 1% or less, 0.8% or less, 0.6% or less, or even 0.5% or less. A preferred example of the $Li_2O$ content is 0.1 to 0.8%. $Li_2O$ has an advantage over $Na_2O$ and $K_2O$ in that both reduction of a Young's modulus decreasing effect and adjustment of properties such as the devitrification temperature are achieved. The $Li_2O$ content may be higher than a $Na_2O$ content, may be higher than a $K_2O$ content, and may be higher than a sum of the $Na_2O$ content and the $K_2O$ content. However, the glass composition of the present embodiment may be substantially free of $Li_2O$.

A $Na_2O$ content is, for example, 0 to 1%. The upper limit of the $Na_2O$ content may be 0.5% or less, 0.2% or less, 0.18% or less, 0.15% or less, 0.13% or less, 0.1% or less, or even 0.08% or less. The glass composition of the present embodiment may be substantially free of $Na_2O$. A $K_2O$ content is, for example, 0 to 0.5%. The upper limit of the $K_2O$ content may be 0.3% or less, 0.1% or less, 0.08% or less, even 0.06% or less, or even 0.04% or less. The glass composition of the present embodiment may be substantially free of $K_2O$.

A sum of the $Na_2O$ content and the $K_2O$ content may be in the range of 0 to 1%, 0 to 0.5%, or even 0 to 0.3%.

($TiO_2$ and $ZrO_2$)

$TiO_2$ and $ZrO_2$ are optional components that can contribute to improvement of the acid resistance. It is desirable to add at least one selected from $TiO_2$ and $ZrO_2$. In particular, it has been found that $ZrO_2$ is a component that can supplement the effect of MgO in improving the Young's modulus. The lower limit of a sum of the $TiO_2$ content and the $ZrO_2$ content may be 0.1% or more, 0.3% or more, 0.5% or more, 0.8% or more, 1% or more, or even 1.5% or more. The upper limit of a sum of the $TiO_2$ content and the $ZrO_2$ content may be 5% or less, 4% or less, 3.5% or less, 3% or less, or even 2.5% or less. In the present embodiment, for example, the sum of the $TiO_2$ content and the $ZrO_2$ content may be in the range of 0.5 to 5%, 0.8 to 4%, or even 1 to 3.5%.

$TiO_2$ and $ZrO_2$ are each added to account for, for example, 0 to 5%. A $TiO_2$ content and a $ZrO_2$ content may each be 0.1% or more, 0.3% or more, 0.5% or more, 1% or more, or even 1.2% or more. The $TiO_2$ content and the $ZrO_2$ content may each be 4% or less, 3% or less, 2.5% or less, or even 2% or less. The glass composition of the present embodiment may be substantially free of $TiO_2$ or $ZrO_2$.

(ZnO)

ZnO is an optional component that may be added. ZnO is added to account for, for example, 0 to 3%, or even 0 to 1.5%. The upper limit of the ZnO content may be 1.4% or less, 1% or less, or even 0.5% or less. The glass composition of the present embodiment may be substantially free of ZnO.

($F_2$)

$F_2$ is also an optional component that may be added for refining or the like. $F_2$ is added to account for, for example, 0 to 0.5% or even 0 to 0.1%. The upper limit of the $F_2$ content may be 0.08% or less. The glass composition of the present embodiment may be substantially free of $F_2$.

($SiO_2$ + $TiO_2$ + $ZrO_2$)

A sum ($SiO_2$ + $TiO_2$ + $ZrO_2$) of the $SiO_2$ content, the $TiO_2$ content, and the $ZrO_2$ content may be, for example, 58% or more. A sum of the $SiO_2$ content, the $TiO_2$ content, and the $ZrO_2$ content may be 58.5% or more, 59% or more, 59.5% or more, 60% or more, 60.5% or more, or even 61% or more. The glass composition having a high ($SiO_2$ + $TiO_2$ + $ZrO_2$) is suitable for achieving a high acid resistance. The upper limit of ($SiO_2$ + $TiO_2$ + $ZrO_2$) is not limited to a particular one, and is, for example, 63.5% or less, 63% or less, or even 62.5% or less.

($SiO_2$ + $Al_2O_3$ + MgO)

A sum ($SiO_2$ + $Al_2O_3$ + MgO) of the $SiO_2$ content, the $Al_2O_3$ content, and the MgO content may be 95% or more, 96% or more, 97% or more, or even 97.5% or more. The sum ($SiO_2 + Al_2O_3 + MgO$) may be, for example, 99% or less, or even 98.5% or less.

($CaO + R_2O$)

Addition of CaO and the alkali metal oxides ($R_2O$) is suitable for adjustment of the devitrification temperature of the glass composition. A sum ($CaO + R_2O$) of the CaO content and the $R_2O$ content may be 0 to 2.5%. The lower limit of ($CaO + R_2O$) may be, for example, 0.05% or more, 0.1% or more, 0.3% or more, 0.5% or more, 0.7% or more, or even 1% or more. The upper limit of ($CaO + R_2O$) may be, for example, 2.3% or less, 2.2% or less, 2% or less, or even 1.8% or less.

(Additional components)

The glass composition may include a component other than those described above. The additional component that can be included in the glass composition are, for example, $Fe_2O_3$, $Y_2O_3$, $La_2O_3$, SrO, BaO, $Cl_2$, $SnO_2$, $CeO_2$, $P_2O_5$, or $SO_3$.

$Fe_2O_3$ is added to account for, for example, 0 to 1%. The upper limit of the $Fe_2O_3$ content may be 0.5%, 0.3% or less, 0.2% or less, 0.15% or less, or even 0.1 or less. The glass composition of the present embodiment may be substantially free of $Fe_2O_3$. It should be noted that although part of iron oxide is present as FeO in the glass composition, the iron oxide content is calculated as $Fe_2O_3$, as is conventional.

$Y_2O_3$ and $La_2O_3$ are optional components that contribute to improvement of the Young's modulus. However, raw materials of these components are relatively expensive. A sum of a $Y_2O_3$ content and a $La_2O_3$ content is, for example, 0 to 5%. The upper limit of the sum of the $Y_2O_3$ content and the $La_2O_3$ content may be 3% or less, 2% or less, 1% or less, or even 0.5% or less. The glass composition of the present embodiment may be substantially free of $Y_2O_3$. The glass composition of the present embodiment may be substantially free of $La_2O_3$, either.

The SrO, BaO, $Cl_2$, $SnO_2$, $CeO_2$, $P_2O_5$, and $SO_3$ contents are each, for example, 0 to 0.5%. The upper limit of the content of each of these components may be 0.3% or less, 0.2% or less, or even 0.1% or less. The glass composition of the present embodiment may be substantially free of each of these components.

(Composition Example A containing 16% or more of MgO)

The glass composition of the present embodiment may include the following components:

| | |
|---|---|
| $SiO_2$ | 50 to 65%; |
| $B_2O_3$ | 0 to 1.5%; |
| $Al_2O_3$ | 10 to 25%; |
| MgO | 16 to 20%; |
| CaO | 0 to 7%; |
| $Li_2O$ | 0 to 1.0%; |
| $Na_2O$ | 0 to 0.2%; |
| $K_2O$ | 0 to 0.1%; |
| $TiO_2$ | 0 to 5%; and |
| $ZrO_2$ | 0 to 5%, where |

a sum of a $SiO_2$ content, a $TiO_2$ content and a $ZrO_2$ content is 58% or more, and
a sum of the $TiO_2$ content and the $ZrO_2$ content is 0.1 % or more.

(Composition Example B where a MgO content is less than 16%, and $ZrO_2$ is included)

The glass composition of the present embodiment may include the following components:

| | |
|---|---|
| $SiO_2$ | 50 to 65%; |
| $B_2O_3$ | 0 to 1.5%; |
| $Al_2O_3$ | 10 to 30%; |
| MgO | 10 to 16% (excluding 16%); |
| CaO | 0 to 7%; |

(continued)

| | |
|---|---|
| $Li_2O$ | 0 to 1.0%; |
| $Na_2O$ | 0 to 0.2%; |
| $K_2O$ | 0 to 0.1%; |
| $TiO_2$ | 0 to 5%; and |
| $ZrO_2$ | 0.1 to 5%, where |

a sum of a $SiO_2$ content, a $TiO_2$ content, and a $ZrO_2$ content is 58% or more.

In Composition Example B, a content of each component can be adjusted with reference to the aforementioned ranges. However, the $Al_2O_3$ content can be adjusted to a slightly higher level, for example, 22 to 29%, or even 23.5 to 28%.

(Composition Example C, which is particularly favorable in acid resistance)

The glass composition of the present embodiment may include the following components:

| | |
|---|---|
| $SiO_2$ | 55 to 65%; |
| $B_2O_3$ | 0 to 1.5%; |
| $Al_2O_3$ | 10 to 28%; |
| MgO | 10 to 20%; |
| CaO | 0 to 7%; |
| $Li_2O$ | 0 to 1.0%; |
| $Na_2O$ | 0 to 0.2%; |
| $K_2O$ | 0 to 0.1%; |
| $TiO_2$ | 0 to 5%; and |
| $ZrO_2$ | 1.2 to 5%, where |

a sum of a $SiO_2$, content, a $TiO_2$ content and a $ZrO_2$ content is 60.4% or more.

The $ZrO_2$ content in Composition Examples A to C may be 1.5 to 3%.

<Properties>

(Young's modulus)

The glass composition of the present embodiment has a Young's modulus of, for example, 98 GPa or more. The lower limit of the Young's modulus can be 99 GPa or more, 99.5 GPa or more, or, in some cases, 100 GPa or more. The upper limit of the Young's modulus is not limited to a particular one, and may be, for example, 115 GPa or less, or even 110 GPa or less.

(Acid resistance)

The acid resistance can be evaluated by a mass decrease rate $\Delta W$ (%) obtained by a test described in EXAMPLES. The mass decrease rate $\Delta W$ of the glass composition of the present embodiment is, for example, 0.3 mass% or less. The upper limit of the mass decrease rate $\Delta W$ can be 0.25 mass% or less, or even 0.1 mass% or less.

[Glass fiber]

The glass composition of the present embodiment is suitable for manufacturing a glass fiber. The glass fiber may be a long glass fiber or a short glass fiber. The glass fiber may be in a form of, for example, at least one selected from the group consisting of a strand, a roving, a yarn, a cloth, a chopped strand, glass wool, and a milled fiber. The cloth is, for example, a roving cloth or a yarn cloth.

Because of its excellent properties, the glass composition of each of the above embodiments can also be used as a shaped glass product other than a glass fiber. An example of the shaped glass product is a glass particle. The glass particle can be manufactured by breaking the glass fiber so finely that the outer shape of the glass fiber is lost or by using, as for the glass fiber, a nozzle having a shape corresponding to an intended shape. The glass composition of each of the above embodiments is also suitable for manufacturing the glass particle without undergoing devitrification. In one embodiment of the present invention, the glass particle includes the glass composition of any of the above embodiments or is formed of the glass composition of any of the above embodiments.

The glass particle may be, for example, an equivalent of at least one selected from the group consisting of a glass flake, a glass powder, a glass bead, and a fine flake. The glass particle can be included in FRPs. In other words, the glass particle can be used for reinforcement, for example, of a reinforced body typically formed of a resin.

Taking into account the fact that the above-described glass composition can be included also in the glass particle, the above-described glass composition can be regarded as a glass composition for glass fibers or glass particles.

[Non-woven fabric, rubber-reinforcing cord]

Each glass fiber provided by the present invention can be used in the same applications as conventional glass fibers. In one embodiment of the present invention, a non-woven glass fiber fabric including the glass fiber is provided. In another embodiment of the present invention, a rubber-reinforcing cord including a strand including a bundle of the glass fibers is provided. The glass fiber can also be used in other applications. Examples of the other applications include reinforcement of a reinforced body typically formed of a resin.

[EXAMPLES]

Hereinafter, the embodiment of the present invention will be described in more detail by Examples and Comparative Examples. The contents of components in composition are expressed in mass% also in the tables below.

<Preparation of glass composition>

Common glass raw materials such as silica sand were blended to give each glass composition shown in Tables 1 and 2, and glass raw material batches were prepared for Examples and Comparative Examples. Each batch was molten by heating it to 1500 to 1600°C using an electric furnace, and the molten state was maintained for about 4 hours until the composition became uniform. After that, part of the molten glass (glass melt) was poured onto an iron plate, and was slowly cooled to room temperature in an electric furnace. A glass composition (sheet-shaped body; glass specimen) as a bulk was obtained in this manner. Properties of thus-obtained glass compositions were evaluated as follows. The results are collectively shown in Tables 1 and 2.

(Young's modulus)

The Young's modulus was determined by an equation $E = 3\rho \cdot v_t^2 \cdot (v_l^2 - 4/3 \cdot v_t^2)/(v_l^2 - v_t^2)$. A longitudinal wave velocity $v_l$ and a transverse wave velocity $v_t$ were measured by an ordinary ultrasonic method for an elastic wave propagating through glass. A density $\rho$ in the equation E was separately measured for the glass by Archimedes' principle.

(Acid resistance)

A glass monofilament having a diameter of 15 $\mu$m was cut to a length of 20 mm, and was weighed in grams equivalent to the specific gravity of the glass. The glass fiber was immersed for 60 minutes in 80 mL of an aqueous sulfuric acid solution having a temperature of 99°C and a specific gravity of 1.2. A mass decrease rate was determined for this case and was defined as $\Delta W$.

The above mass decrease rates were calculated by the following equation, where Wa is the mass before the immersion, and Wb is the mass after the immersion.

$$\text{Mass decrease rate (\%)} = \{(Wa - Wb)/Wa\} \times 100$$

[Table 1]

| Examples | 1 | 2 | 3 | 4 | 5 | 6 | 7 | 8 |
|---|---|---|---|---|---|---|---|---|
| $SiO_2$ | 57.62 | 59.64 | 59.62 | 59.53 | 59.90 | 57.85 | 56.73 | 60.06 |
| $Al_2O_3$ | 20.41 | 20.24 | 20.24 | 20.21 | 21.18 | 24.54 | 27.28 | 20.39 |
| $B_2O_3$ | 0.00 | 0.00 | 0.06 | 0.00 | 0.00 | 0.06 | 0.05 | 0.00 |

(continued)

| Examples | 1 | 2 | 3 | 4 | 5 | 6 | 7 | 8 |
|---|---|---|---|---|---|---|---|---|
| MgO | 18.49 | 16.67 | 16.63 | 17.30 | 17.41 | 14.20 | 12.65 | 16.79 |
| CaO | 0.94 | 0.93 | 0.93 | 0.93 | 0.00 | 0.90 | 0.88 | 0.93 |
| $Li_2O$ | 0.50 | 0.49 | 0.49 | 0.00 | 0.50 | 0.48 | 0.47 | 0.50 |
| $Na_2O$ | 0.00 | 0.00 | 0.00 | 0.00 | 0.00 | 0.00 | 0.00 | 0.00 |
| $K_2O$ | 0.00 | 0.00 | 0.00 | 0.00 | 0.00 | 0.00 | 0.00 | 0.00 |
| $Fe_2O_3$ | 0.00 | 0.00 | 0.00 | 0.00 | 0.00 | 0.00 | 0.00 | 0.00 |
| $TiO_2$ | 0.00 | 0.00 | 0.00 | 0.00 | 0.00 | 0.00 | 0.00 | 1.33 |
| $ZrO_2$ | 2.05 | 2.03 | 2.03 | 2.03 | 1.02 | 1.97 | 1.94 | 0.00 |
| $SiO_2+TiO_2+ZrO_2$ | 60.4 | 60.3 | 61.2 | 60.5 | 61.6 | 61.4 | 60.0 | 61.8 |
| Acid resistance $\Delta W$ | 0.070 | 0.205 | 0.024 | 0.050 | 0.200 | 0.080 | 0.120 | 0.240 |
| Young's modulus E (GPa) | 101.9 | 100.6 | 100.6 | 100.3 | 100.3 | 100.9 | 101.6 | 100.0 |

[Table 2]

| Comparative Examples | 1 | 2 |
|---|---|---|
| $SiO_2$ | 57.29 | 59.11 |
| $Al_2O_3$ | 21.13 | 23.40 |
| $B_2O_3$ | 1.15 | 1.14 |
| MgO | 16.04 | 15.86 |
| CaO | 3.72 | 0.00 |
| $Li_2O$ | 0.50 | 0.49 |
| $Na_2O$ | 0.11 | 0.00 |
| $K_2O$ | 0.00 | 0.00 |
| $Fe_2O_3$ | 0.06 | 0.00 |
| $TiO_2$ | 0.00 | 0.00 |
| $ZrO_2$ | 0.00 | 0.00 |
| $SiO_2+TiO_2+ZrO_2$ | 57.29 | 59.11 |
| Acid resistance $\Delta W$ | 0.312 | 0.200 |
| Young's modulus E (GPa) | 100.0 | 97.5 |

Each Example achieved a Young's modulus of 98 GPa or more, and a mass decrease rate $\Delta W$ of 0.3% or less. On the other hand, each Comparative Example failed to satisfy these properties.

As described above, the present description discloses the following techniques.

(Technique 1)

A glass composition for glass fibers, including, in mass%:

$SiO_2$ 50 to 65%;
$Al_2O_3$ 10 to 30%;
MgO 10 to 20%;
CaO 0 to 7%;
$TiO_2$ 0 to 5%; and

EP 4 620 932 A1

(continued)

| | |
|---|---|
| $ZrO_2$ | 0 to 5%, where |

a sum of a $SiO_2$ content, a $TiO_2$ content and a $ZrO_2$ content is 58% or more,
a sum of the $TiO_2$ content and the $ZrO_2$ content is 0.1 % or more, and
when a MgO content is 10% or more and less than 16%, the glass composition includes 0.1% or more of $ZrO_2$.

(Technique 2)

The glass composition according to Technique 1, including, in mass%:

| | |
|---|---|
| $SiO_2$ | 55 to 62%; |
| $Al_2O_3$ | 15 to 30%; |
| MgO | 12 to 20%; |
| CaO | 0 to 4%; |
| $TiO_2$ | 0 to 3%; and |
| $ZrO_2$ | 0 to 3%. |

(Technique 3)

The glass composition according to Technique 1 or 2, wherein the sum of the $TiO_2$ content and the $ZrO_2$ content is 0.5% or more and 5% or less in mass%.

(Technique 4)

The glass composition according to any one of Techniques 1 to 3, wherein the $SiO_2$ content is in the range of 57.5% to 61.5% in mass%.

(Technique 5)

The glass composition according to any one of Techniques 1 to 4, wherein a $Li_2O$ content is in the range of 0 to 1.5% in mass%.

(Technique 6)

The glass composition according to any one of Techniques 1 to 5, wherein a sum of a $Na_2O$ content and a $K_2O$ content is in the range of 0 to 1% in mass%.

(Technique 7)

The glass composition according to any one of Techniques 1 to 6, wherein a $B_2O_3$ content is in the range of 0 to 1.5% in mass%.

(Technique 8)

The glass composition according to any one of Techniques 1 to 7, wherein a sum of a $Y_2O_3$ content and a $La_2O_3$ content is in the range of 0 to 5% in mass%.

(Technique 9)

The glass composition according to any one of Techniques 1 to 8, having a Young's modulus of 98 GPa or more.

(Technique 10)

The glass composition according to any one of Techniques 1 to 9, wherein
$\Delta W$ is 0.3 mass% or less, where $\Delta W$ is a mass decrease rate determined for a case where the glass composition has a mass in grams equivalent to a specific gravity of the glass composition and is immersed for 60 minutes in 80 mL of a sulfuric acid solution having a specific gravity of 1.2 and a temperature of 99°C.

(Technique 11)

A glass fiber including the glass composition according to any one of Techniques 1 to 10.

(Technique 12)

The glass fiber according to Technique 11, being in a form of at least one selected from the group consisting of a strand, a roving, a yarn, a cloth, a chopped strand, glass wool, and a milled fiber.

**Claims**

1.   A glass composition for a glass fiber, comprising, in mass%:

| | |
|---|---|
| $SiO_2$ | 50 to 65%; |
| $Al_2O_3$ | 10 to 30%; |
| MgO | 10 to 20%; |
| CaO | 0 to 7%; |
| $TiO_2$ | 0 to 5%; and |
| $ZrO_2$ | 0 to 5%, wherein |

a sum of a $SiO_2$ content, a $TiO_2$ content and a $ZrO_2$ content is 58% or more,
a sum of the $TiO_2$ content and the $ZrO_2$ content is 0.1 % or more, and
when a MgO content is 10% or more and less than 16%, the glass composition includes 0.1% or more of $ZrO_2$.

2.   The glass composition according to claim 1, comprising, in mass%:

| | |
|---|---|
| $SiO_2$ | 55 to 62%; |
| $Al_2O_3$ | 15 to 30%; |
| MgO | 12 to 20%; |
| CaO | 0 to 4%; |
| $TiO_2$ | 0 to 3%; and |
| $ZrO_2$ | 0 to 3%. |

3.   The glass composition according to claim 1, wherein the sum of the $TiO_2$ content and the $ZrO_2$ content is 0.5% or more and 5% or less in mass%.

4.   The glass composition according to claim 1, wherein the $SiO_2$ content is in the range of 57.5% to 61.5% in mass%.

5.   The glass composition according to claim 1, wherein a $Li_2O$ content is in the range of 0 to 1.5% in mass%.

6.   The glass composition according to claim 1, wherein a sum of a $Na_2O$ content and a $K_2O$ content is in the range of 0 to 1% in mass%.

7.   The glass composition according to claim 1, wherein a $B_2O_3$ content is in the range of 0 to 1.5% in mass%.

8.   The glass composition according to claim 1, wherein a sum of a $Y_2O_3$ content and a $La_2O_3$ content is in the range of 0 to 5% in mass%.

9.   The glass composition according to claim 1, having a Young's modulus of 98 GPa or more.

10.  The glass composition according to claim 1, wherein $\Delta W$ is 0.3 mass% or less, where $\Delta W$ is a mass decrease rate determined for a case where the glass composition has a mass in grams equivalent to a specific gravity of the glass composition and is immersed for 60 minutes in 80 mL of sulfuric acid having a specific gravity of 1.2 and a temperature of 99°C.

11. A glass fiber comprising the glass composition according to any one of claims 1 to 10.

12. The glass fiber according to claim 11, being in a form of at least one selected from the group consisting of a strand, a roving, a yarn, a cloth, a chopped strand, glass wool, and a milled fiber.

## INTERNATIONAL SEARCH REPORT

| International application No. |
|---|
| **PCT/JP2023/040292** |

### A. CLASSIFICATION OF SUBJECT MATTER

*C03C 13/02*(2006.01)i
FI: C03C13/02

According to International Patent Classification (IPC) or to both national classification and IPC

### B. FIELDS SEARCHED

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

### C. DOCUMENTS CONSIDERED TO BE RELEVANT

| Category* | Citation of document, with indication, where appropriate, of the relevant passages | Relevant to claim No. |
|---|---|---|
| X | CN 112745032 A (TAISHAN FIBERGLASS INC.) 04 May 2021 (2021-05-04) paragraph [0001], examples | 1-12 |
| X | EP 3287423 A2 (JUSHI GROUP CO., LTD.) 28 February 2018 (2018-02-28) paragraph [0002], examples | 1, 3-8, 10-12 |
| X | WO 2015/009686 A1 (PPG INDUSTRIES OHIO, INC.) 22 January 2015 (2015-01-22) specification, page 1, lines 12-13, examples | 1, 3-8, 10-12 |
| X | JP 2003-321247 A (NITTO BOSEKI CO., LTD.) 11 November 2003 (2003-11-11) paragraph [0001], examples | 1, 3, 5-8, 10-12 |
| X | WO 2022/148275 A1 (TAISHAN FIBERGLASS INC.) 14 July 2022 (2022-07-14) specification, page 1, line 3, examples | 1-6, 8, 10-12 |
| X | JP 2022-507967 A (OWENS CORNING INTELLECTUAL CAPITAL, LLC) 18 January 2022 (2022-01-18) claims, examples | 1-4, 6-8, 10-12 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 January 2024** | **23 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

| International application No. |
| --- |
| **PCT/JP2023/040292** |

| Patent document cited in search report | | | Publication date (day/month/year) | Patent family member(s) | | | Publication date (day/month/year) |
| --- | --- | --- | --- | --- | --- | --- | --- |
| CN | 112745032 | A | 04 May 2021 | (Family: none) | | | |
| EP | 3287423 | A2 | 28 February 2018 | US | 2018/0208497 | A1 | |
| | | | | WO | 2017/197933 | A2 | |
| | | | | CN | 108358460 | A | |
| | | | | KR | 10-2018-0096495 | A | |
| WO | 2015/009686 | A1 | 22 January 2015 | US | 2015/0018194 | A1 | |
| | | | | CN | 105392744 | A | |
| JP | 2003-321247 | A | 11 November 2003 | (Family: none) | | | |
| WO | 2022/148275 | A1 | 14 July 2022 | JP | 2023-512885 | A | |
| | | | | paragraph [0001], examples | | | |
| | | | | CN | 112624620 | A | |
| | | | | KR | 10-2022-0107238 | A | |
| JP | 2022-507967 | A | 18 January 2022 | WO | 2020/112396 | A2 | |
| | | | | claims, examples | | | |
| | | | | US | 2020/0165158 | A1 | |
| | | | | CN | 111217531 | A | |
| | | | | KR | 10-2021-0096138 | A | |

Form PCT/ISA/210 (patent family annex) (July 2022)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006057405 A1
- JP 6391875 B